# EUROPÄISCHE PATENTSCHRIFT

(11) **EP 3 288 795 B1**
(45) Veröffentlichungstag und Bekanntmachung des Hinweises auf die Patenterteilung: **10.05.2023**
(21) Anmeldenummer: 16707717.1
(22) Anmeldetag: 02.03.2016
(51) Int. Cl.: B60N 2/015, F16B 5/02

(54) **VORRICHTUNG ZUM BEFESTIGEN EINES SITZES IN EINEM FAHRZEUG, FAHRZEUGSITZANORDNUNG**
DEVICE FOR FIXING A SEAT IN A VEHICLE, VEHICLE SEAT ARRANGEMENT
DISPOSITIF DE FIXATION D'UN SIÈGE DANS UN VÉHICULE, ET ENSEMBLE SIÈGE DE VÉHICULE

(30) Priorität: 03.03.2015 DE 102015203763
(43) Veröffentlichungstag der Anmeldung: 07.03.2018
(73) Patentinhaber: Volkswagen Aktiengesellschaft, 38440 Wolfsburg (DE)
(72) Erfinder: JEUKENDRUP, Olaf, 38302 Wolfenbüttel (DE)
(86) Internationale Anmeldenummer: PCT/EP2016/054344
(87) Internationale Veröffentlichungsnummer: WO 2016/139213

(56) Entgegenhaltungen:
- DE-A1-102006 038 368
- DE-A1-102007 013 433
- DE-B3-102006 034 463

## Beschreibung

Die Erfindung betrifft eine Anordnung, mit einem ersten Teil, mit einem zweiten Teil, wobei das erste Teil zur Befestigung an dem ein Schraubgewinde aufweisenden zweiten Teil wenigstens eine Schraubenöffnung aufweist, mit einer durch die Schraubenöffnung in das Schraubgewinde eingeschraubten Schraube, und mit einer Vorrichtung zum Befestigen des ersten Teils an dem zweiten Teil.

Aus dem Stand der Technik sind Anordnungen mit Vorrichtungen der eingangs genannten Art bereits bekannt. So offenbart beispielsweise die Offenlegungsschrift DE 10 2007 013 433 A1 eine Vorrichtung zum Befestigen eines Sitzes in einem Kraftfahrzeug, wobei ein Sitzgestell des Sitzes an einem Karosserieteil des Kraftfahrzeugs verschraubt wird. Weiterhin ist aus der Offenlegungsschrift DE 10 2011 002 441 A1 eine Vorrichtung zum Befestigen eines Sitzes in einem Fahrzeug bekannt, bei welchem der Sitz an einer Sitzschiene, die an dem Fahrzeug durch Verschraubung befestigbar ist, angeordnet ist.

Die bekannten Vorrichtungen haben den Nachteil, dass die Verschraubung des Sitzes im Fahrzeug in der Regel nur schwer zugänglich ist. Und auch bei Anwendungen außerhalb des Automobilbaus tritt dieses Problem regelmäßig auf. Häufig ist die Sicht zu der Schraubenöffnung beispielsweise durch eine Sitzschiene und den Sitz selbst versperrt, und die Verschraubung muss blind durchgeführt werden. Dabei kann die Schraube leicht verkanten oder in dem Sitzgestell "verloren" gehen.

Aus der Offenlegungsschrift DE 10 2006 038 368 A1 ist ein Befestigungssystem zur Befestigung eines Kunststoffteils an einem Bauteil mittels wenigstens einer Schraube bekannt, wobei die Schraube in einem kunststoffteilseitige Schraubenaufnahme einführbar und in ein bauteilseitiges Gewinde einschraubbar ist und einen Anlagebund und ein axial dazu beabstandet angeordneten Haltebund aufweist, wobei durch den Anlagebund eine maximale Einschraubtiefe definiert und durch den Haltebund das Kunststoffteil an dem Bauteil verspannt wird. Aus der Offenlegungsschrift DE 10 2006 034 463 B3 ist außerdem eine Vorrichtung zum Befestigen eines Anbauteils und eines Trägerteils in einem Abstand voneinander bekannt, die über eine Einbaumutter verfügt, die ein Innengewinde einer ersten Gangrichtung aufweist, sowie über eine Ausgleichsbuchse, die ein an das Innengewinde angepasstes Außengewinde aufweist, sowie über eine Befestigungsschraube, deren Schraubenschaft mit einem Außengewinde einer zu der ersten Gangrichtung entgegengesetzten zweiten Gangrichtung ausgebildet wird. Die Ausgleichsbuchse ist mit einer Innenhülse ausgebildet, die einen Kopfabschnitt mit einer Anordnung von Verstärkungszonen und Adaptionen aufweist, wobei die Verstärkungszonen einen gegenüber einem radial nach außen gerichteten aufgeweiteten größeren Widerstand als die Adaptionszonen aufweisen.

Der Erfindung liegt somit die Aufgabe zugrunde, eine Anordnung mit einer Vorrichtung zu schaffen, die die oben genannten Nachteile überwindet und insbesondere eine sichere Verschraubung ohne Verkanten und ohne Verlorengehen beispielsweise auch dann ermöglicht, wenn die Schraubenöffnung nicht sichtbar ist.

Die der Erfindung zugrundeliegende Aufgabe wird durch eine Anordnung mit einer Vorrichtung mit den Merkmalen des Anspruchs 1 gelöst. Diese hat den Vorteil, dass die Schraube automatisch der Schraubenöffnung zugeführt wird und dabei nicht verkanten kann. Hierzu ist erfindungsgemäß vorgesehen, dass der Schraubenöffnung eine Einführhilfe zugeordnet ist, die wenigstens zwei Führungszungen aufweist, die trichterförmig zu der Schraubenöffnung aufeinander zulaufen und zumindest an ihrem der Schraubenöffnung zugewandten freien Enden elastisch aufspreizbar sind. Der Einschrauböffnung sind also Führungszungen zugeordnet, die trichterförmig in Richtung der Schraubenöffnung aufeinander zulaufen. Dadurch wird die Schraube beim Einfügen automatisch der Schraubenöffnung zugeführt.

Dadurch, dass die Führungszungen an ihren freien Enden, die der Schraubenöffnung zugewandt sind, elastisch aufspreizbar sind, lassen sich die freien Enden voneinander wegbewegen, der Abstand zwischen den freien Enden also vergrößern, sodass die Schraube auch bis zum Anschlag in die Schraubenöffnung einschraubbar ist, also bis ein Schraubenkopf der Schraube auf dem Abschnitt des Sitzgestells aufliegt, welcher die Schraubenöffnung aufweist. Hierdurch wird erreicht, dass die Schraube zunächst mit ihrem Schraubenschaft von den Führungszungen in Richtung der Schraubenöffnung geführt wird, wobei die Führungszungen anschließend durch den Schraubenkopf gespreizt werden, bis die Schraube vollständig eingesetzt beziehungsweise eingeschraubt ist.

Durch die Führungszungen, die insbesondere gleichmäßig beabstandet über den Umfang der Schraubenöffnung verteilt angeordnet sind, ist eine optimale Ausrichtung der Schraube in Bezug auf die Schraubenöffnung gewährleistet. Erfindungsgemäß sind mindestens zwei der Führungszungen vorgesehen. Sind nur zwei Führungszungen vorgesehen, so sind diese zweckmäßigerweise einander gegenüberliegend angeordnet und weisen bevorzugt im Querschnitt gesehen eine Krümmung zur sicheren Führung der Schraube auf. In einer bevorzugten Weiterbildung ist vorgesehen, dass mindestens drei, insbesondere genau drei, Führungszungen vorgesehen sind, die gleichmäßig über den Umfang der Schraubenöffnung verteilt angeordnet/anordenbar sind. In diesem Fall kann auf eine Krümmung der Führungszungen verzichtet werden, weil die Schraube durch die drei Anlagestellen an den drei Führungszungen bereits ausreichend sicher geführt ist.

Weiterhin ist bevorzugt vorgesehen, dass die Einführhülse über ihren Umfang gleichmäßig verteilt abwechselnd drei Abstandshalter und drei Führungszungen aufweist, sodass zwischen zwei Abstandshaltern jeweils eine Führungszunge liegt, wobei die Abstandshalter und die Führungszungen vorzugweise die gleiche Länge aufweisen. Dadurch ist eine gleichmäßige Führung der Schraube und Abstützung der Einführhülse gewährleistet. Darüber hinaus wird durch die Wahl der gleichen Länge von Abstandshaltern und Führungszungen gewährleistet, dass die Einführhülse auch dann noch in axialer Richtung an dem Führungsteil gestützt ist, wenn die Führungszungen durch ihre Eigenelastizität eingefedert sind.

Gemäß einer bevorzugten Weiterbildung der Erfindung ist vorgesehen, dass die Führungszungen elastisch verformbar ausgebildet sind. Das elastische Aufspreizen der Führungszungen wird somit durch die Ausbildung der Führungszungen selbst gewährleistet, wodurch eine einfache und kompakte Lösung zur Verfügung gestellt wird. Insbesondere sind die Führungszungen dazu aus einem elastisch verformbaren Material, insbesondere aus Kunststoff, gefertigt. Dadurch, dass die Führungszungen insgesamt elastisch verformbar ausgebildet sind, können diese entlang ihrer gesamten Längserstreckung verformt werden und dadurch eine sichere Führung der Schraube in jeder Einschubposition der Schraube gewährleisten. Gemäß einer alternativen Ausführungsform ist bevorzugt vorgesehen, dass die Führungszungen an ihrem dem freien Ende abgewandten Ende verschwenkbar gelagert und mit einer Federkraft beaufschlagt sind, welche die freien Enden der Führungszungen aufeinander zu drängen. In diesem Fall können die Führungszungen selbst starr ausgebildet sein. Es ergeben sich hierdurch ebenfalls die zuvor genannten Vorteile.

Gemäß einer vorteilhaften Weiterbildung der Erfindung ist außerdem vorgesehen, dass die Einführhilfe eine Einführhülse aufweist, die zumindest abschnittsweise als axial geschlitzte Hülse zum Formen der Führungszungen ausgebildet ist. Die Führungszungen werden also durch die axial geschlitzte Einführhülse gebildet oder zumindest mitgebildet. Durch die axiale Schlitzung der Hülse weist diese in einem Axialabschnitt in Umfangsrichtung gesehen voneinander getrennte Hülsenabschnitte auf. Diese Hülsenabschnitte oder zumindest einige dieser Hülsenabschnitt sind dann trichterförmig aufeinander zulaufend ausgerichtet, um die erfindungsgemäßen Führungszungen zu bilden. Die Führungszungen sind damit einstückig mit der Führungshülse ausgebildet und können mit der Führungshülse auf einfache Art und Weise an dem Sitzgestell angeordnet und ausgerichtet werden. Hierdurch werden eine einfache Montage und geringe Herstellungskosten ermöglicht.

Weiterhin ist bevorzugt vorgesehen, dass die freien Enden der Führungszungen im entspannten Zustand der Führungszungen auf einem gedachten Kreis liegen, dessen Durchmesser kleiner oder gleich dem Innendurchmesser der Schraubenöffnung und/oder der Gewindebohrung ist. Hierdurch ergibt sich der Vorteil, dass die Schraube sicher der Schraubenöffnung und der Gewindebohrung zugeführt wird, wobei insbesondere verhindert wird, dass die Schraube mit ihrem freien Ende auf einen Rand der Schraubenöffnung oder der Gewindebohrung trifft. Damit ist ein einfaches Einführen der Schraube in die Schraubenöffnung und die Gewindebohrung gewährleistet, was insbesondere eine "blinde" Montage vereinfacht.

Weiterhin ist bevorzugt vorgesehen, dass die Führungshülse abschnittsweise zylinderförmig ausgebildet ist, wobei ein Durchmesser oder eine Breite der lichten Weite der Führungshülse größer oder gleich einer Breite oder einem Durchmesser eines Schraubenkopfs der Schraube ist. Hierdurch wird gewährleistet, dass die Schraube insgesamt in die Führungshülse einführbar ist. Entspricht die lichte Weite der Führungshülse dem Durchmesser des Schraubenkopfs, so wird dieser in der Führungshülse außerdem auch sicher seitlich geführt, sodass ein gerades beziehungsweise senkrechtes Einführen der Schraube in die Schraubenöffnung und die Gewindebohrung gewährleistet ist. Alternativ kann die lichte Weite jedoch auch größer als der Durchmesser des Schraubenkopfs gewählt sein. Dabei wird zwar eine zeitweise schräge Lage der Schraube bezüglich der Einführöffnung in Kauf genommen, jedoch wird dadurch beispielsweise das Zuführen eines Werkzeugs in die Führungshülse zum Festschrauben der Schraube in der Gewindebohrung vereinfacht. Durch die Führungszungen wird die Schraube dennoch ausreichend genau der Schraubenöffnung ohne Verkanten zugeführt, die Schraube wird automatisch durch die Führungszungen und die Schraubenöffnung ausgerichtet.

Erfindungsgemäß ist die Einführhilfe derart ausgebildet oder angeordnet, dass die freien Enden der Führungszungen seitlich an dem größten Durchmesser des Schraubenkopfs anliegen, wenn die Schraube maximal in die Gewindebohrung eingeschraubt ist. Hierdurch ergibt sich der Vorteil, dass die Führungszungen nicht hinter dem Schraubenkopf einrasten, sondern dass die Schraube jederzeit durch Drehen in ihre Öffnungsrichtung wieder gelöst werden kann. Gemäß einer alternativen Ausführungsform ist vorgesehen, dass die Führungszungen derart ausgebildet sind, dass sie in einer maximal eingeschraubten Stellung der Schraube zumindest ein Stück weit zurückfedern und dadurch in Gegenüberlagestellung zu einer Axialstirnseite des Schraubenkopfes beziehungsweise der Schraube gelangen. Dadurch ist ein versehentliches Lösen der Schraube sicher formschlüssig durch die Führungszungen verhindert. Zum Lösen der Schraube wird ein Werkzeug in die Führungshülse eingeführt, wobei das Werkzeug die Führungszungen beim Einführen wieder aufspreizt und dadurch die Schraube zum Lösen freigibt.

Gemäß einer vorteilhaften Weiterbildung der Erfindung ist vorgesehen, dass die Einführhilfe formschlüssig an dem ersten Teil, insbesondere an dem Sitzgestell ausgerichtet ist. Dadurch wird eine sichere Zuordnung der Führungszungen zu der Schraubenöffnung auf einfache Art und Weise gewährleistet. Insbesondere ist vorgesehen, dass die Einführhülse auf das Sitzgestell insbesondere als Bestandteil eines Blendenelements aufgesteckt oder in eine dafür vorgesehene Aufnahme eingesteckt ist.

Weiterhin ist bevorzugt vorgesehen, dass die Einführhülse wenigstens einen Abstandshalter zum Ausrichten an dem ersten Teil, insbesondere an dem Sitzgestell aufweist. Durch den insbesondere einstückig mit der Einführhülse ausgebildeten Abstandshalter wird gewährleistet, dass sich die Einführhülse für den Verschraubungsvorgang in der dafür vorgesehenen Position befindet. Darüber hinaus wird die Einführhülse durch den oder die Abstandhalter bei dem Verschrauben insbesondere des Sitzes mit dem Fahrzeugteil sicher an dem Sitzgestell abgestützt.

Gemäß einer bevorzugten Weiterbildung der Erfindung ist außerdem vorgesehen, dass die Einführhülse gleichmäßig über einen Umfang verteilt angeordnete Abstandshalter zur Ausrichtung der Einführhülse in einer Einführhülsenaufnahme des Sitzgestells aufweist. Die Abstandhalter sichern somit vorteilhaft in der Einführhülsenaufnahme die korrekte Ausrichtung der Eiführhülse bezüglich der Schraubenöffnung. Insbesondere wird die Einführhülsenaufnahme von dem Abschnitt des ersten Teils oder Sitzgestells gebildet, welcher auch die Schraubenöffnung aufweist, um eine sichere Zuordnung von Einführhülse zu Schraubenöffnung zu gewährleisten. Vorzugsweise ist vorgesehen, dass die Einführhülse zwei oder drei Abstandshalter aufweist. Besonders bevorzugt ist vorgesehen, dass die Abstandshalter in Umfangsrichtung gesehen zwischen den Führungszungen angeordnet sind. Insbesondere ist vorgesehen, dass die Abstandshalter von Umfangsabschnitten der geschlitzten Einführhülse gebildet werden, die nicht wie die Führungszungen trichterförmig aufeinander zulaufen, sondern sich axial beziehungsweise zylinderabschnittsförmig erstrecken. Auch kann vorgesehen sein, dass die Abstandshalter radial von der Einführhülse nach außen abstehen, um eine entsprechende Abstützung an dem ersten Teil beziehungsweise Sitzgestell insbesondere in der Einführhülsenaufnahme zu gewährleisten.

Weiterhin ist bevorzugt vorgesehen, dass die Anordnung als Fahrzeugsitzanordnung mit den Merkmalen des Anspruchs 9 ausgebildet ist. Es ergeben sich hierdurch die bereits genannten Vorteile. Weitere Merkmale und Vorteile ergeben sich aus dem zuvor Beschriebenen sowie aus den Ansprüchen.

Im Folgenden soll die Erfindung anhand der Zeichnung näher erläutert werden. Dazu zeigen
- Figur 1: eine Fahrzeugsitzanordnung für ein Kraftfahrzeug in einer vereinfachten Darstellung,
- Figur 2: eine Vorrichtung zum Befestigen der Fahrzeugsitzanordnung in einer Detailansicht,
- Figur 3: eine Führungshülse der Vorrichtung in einer Unteransicht,
- Figur 4: eine alternative Ausführungsform der Führungshülse in einer Unteransicht und

Figuren 5A und 5B die Vorrichtung in unterschiedlichen Betriebszuständen.

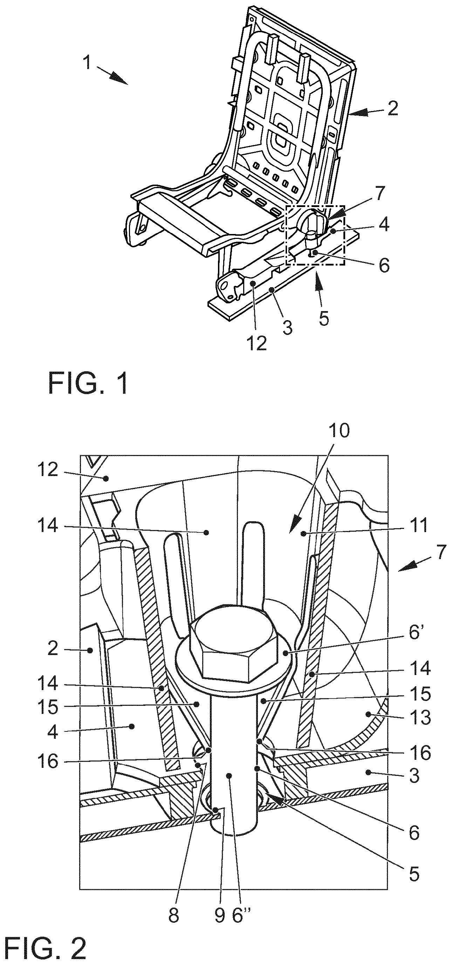

Figur 1 zeigt in einer perspektivischen Darstellung eine Fahrzeugsitzanordnung 1 mit einem Fahrzeugsitz 2 und einem, einem Kraftfahrzeug zugehörigen Fahrzeugteil 3, das beispielsweise als Sitzschiene ausgebildet sein kann. Von dem Sitz 2 ist vorliegend lediglich das Grundgerüst gezeigt. Das Grundgerüst weist an seiner Unterseite ein Sitzgestell 4 auf, das dem Fahrzeugteil 3 zuordenbar ist. Durch eine Verschraubung 5 soll das Sitzgestell 4 beziehungsweise der Sitz 2 an dem Fahrzeugteil 3 befestigt werden. Hierzu ist eine Schraube 6 vorgesehen. Um die Befestigung des Sitzes 2 an dem Fahrzeugteil 3 zu erleichtern, insbesondere um das Verschrauben zu vereinfachen, ist eine Vorrichtung 7 vorgesehen, die im Folgenden näher erläutert werden soll.

Figur 2 zeigt dazu eine Detailansicht der Vorrichtung 7 in einer perspektivischen Schnittdarstellung. Die Vorrichtung 7 ist der Verschraubung 5 zugeordnet. Die Verschraubung 5 weist neben der Schraube 6 außerdem eine in dem Sitzgestell 4 ausgebildete Schraubenöffnung 8 sowie ein an dem Fahrzeugteil 3 angeordnetes Schraubgewinde 9 auf, das -wie dargestellt- von einer Gewindebohrung oder alternativ von einer an dem Fahrzeugteil 3 angeordneten Mutter gebildet wird. Die Schraube 6 weist einen Schraubenkopf 6', dessen Durchmesser größer ist als der Durchmesser der Schraubenöffnung 8,und einen Gewindeschaft 6" auf, sodass die Schraube 7 mit dem Schraubenkopf 6' auf dem Rand der Schraubenöffnung 8 aufliegt, wenn sie mit ihrem Gewindeschaft 6" vollständig beziehungsweise maximal weit in das Schraubgewinde 9 des Fahrzeugteils 3 eingeschraubt wurde, um dadurch das Sitzgestell 4 an dem Fahrzeugteil 3 zu befestigen.

Die Vorrichtung 7 weist eine Einführhilfe 10 auf, die der Schraubenöffnung 8 des Sitzgestells 4 zugeordnet ist. Die Einführhilfe 10 weist eine, insbesondere aus Kunststoff oder Metall gefertigte Einführhülse 11 auf, deren Mittelachse zumindest im Wesentlichen mit der Mittelachse der Schraubenöffnung 8 übereinstimmt. Die Einführhülse 11 ist dabei vorliegend einstückig mit einem Blendenelement 12 ausgebildet, das auf das Sitzgestell aufgesteckt ist, wie insbesondere auch in Figur 1 gezeigt ist. Die Einführhülse 11 ist dabei in einer Einführhülsenaufnahme 13 des Sitzgestells 4 angeordnet. An ihrem der Schraubenöffnung 8 abgewandten Ende ist die Einführhülse 11 vollumfänglich geschlossen ausgebildet. Insofern weist die Einführhülse 11 einen geschlossenen Hülsenabschnitt auf. In Richtung der Schraubenöffnung 8 folgt auf den geschlossenen Hülsenabschnitt ein Abschnitt, in welchem die Einführhülse 11 als axial geschlitzte Einführhülse 11 ausgebildet ist, sodass sich mehrere in Umfangsrichtung gesehen getrennt vorliegende Hülsenteile ergeben. Vorliegend ist vorgesehen, dass die Einführhülse 11 in dem geschlitzten Abschnitt sechs Schlitze aufweist, sodass sich sechs Hülsenteile ergeben, die gleichmäßig beabstandet -in Umfangsrichtung gesehen- voneinander angeordnet sind, und vorliegend dieselbe Länge aufweisen. Drei der Hülsenteile bilden dabei jeweils einen Abstandshalter 14, während die drei verbleibenden Hülsenteile jeweils eine Führungszunge 15 bilden. Zwischen zwei benachbarten Abstandshaltern 14 ist jeweils eine der Führungszungen 15 angeordnet, sodass sich über den Umfang der Einführhülse 11 gesehen Abstandshalter 14 und Führungszungen 15 abwechseln.

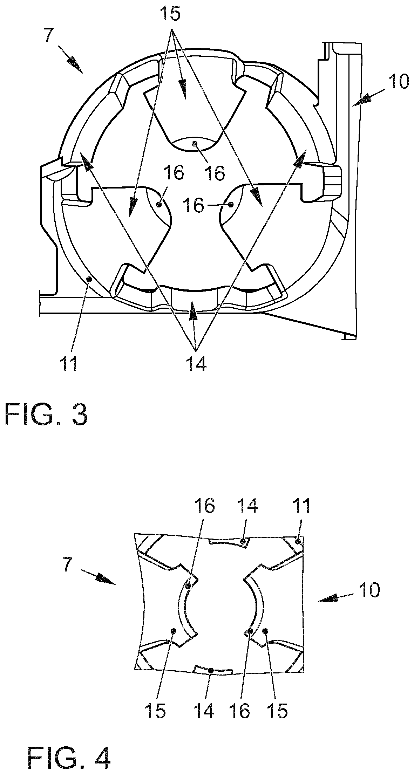

Mit Bezug auf Figur 3 soll die Ausbildung der Einführhülse 11 näher erläutert werden. Die Einführhülse 11 ist in Figur 3 in einer Unteransicht, also beispielsweise mit Blick aus Richtung der Schraubenöffnung 8, gezeigt. Zu sehen ist die Anordnung der drei Führungszungen 15 zwischen den Abstandshaltern 14. Die Abstandshalter 14 sind axial in Bezug auf die Führungshülse 11 ausgerichtet. Gegebenenfalls können die Abstandshalter 15 auch leicht geneigt nach innen in Richtung der Schraubenöffnung 8 verlaufen, wie in Figur 2 gezeigt ist. Die Abstandshalter 14 wirken insbesondere mit dem Sitzgestell 4 zusammen, um die Position und Ausrichtung der Vorrichtung 7, insbesondere der Einführhülse 11 zu dem Sitzgestell 4 zu gewährleisten. Dazu können die Abstandshalter 14 beispielsweise an ihrer Außenseite in der Einführhülsenaufnahme 13 des Sitzgestells 4 geführt sein. Insbesondere sind die Abstandhalter 14 derart ausgebildet, dass sie an ihrer freien Stirnseite auf dem Sitzgestell 4 aufliegen, um damit den Axialabstand beziehungsweise die axiale Anordnung der Einführhülse 11 zu der Schraubenöffnung 8 sicher zu stellen.

Die drei Führungszungen 15 weisen im Längsschnitt gesehen einen trichterförmigen Verlauf auf. Dazu, wie insbesondere in Figuren 2 und 3 gezeigt ist, verlaufen die Führungszungen 15 zumindest abschnittsweise trichterförmig aufeinander zu. Die Führungszungen 15 sind insofern radial nach innen gebogen, sodass die freien Enden 16 der Führungszungen 15 auf einem gedachten Kreis liegen, dessen Durchmesser kleiner ist als der Durchmesser der Schraubenöffnung 8, insbesondere auch kleiner als der Durchmesser, auf welchem die Abstandshalter 14 angeordnet sind.

Die Führungszungen 15 sind elastisch verformbar ausgebildet. Dazu ist beispielsweise das Blendenelement 12 aus elastisch verformbarem Kunststoff gefertigt. Zumindest dabei ist die Einführhilfe 10 derart gestaltet, dass eine elastische Verformung der Führungszunge 15 möglich ist. Die Einführhülse 11 weist an ihrem zylinderförmigen Abschnitt eine lichte Weite auf, die mindestens so groß ist, dass sie den Schraubenkopf 7 problemlos aufnehmen kann.

Soll nun der Sitz 2 an dem Fahrzeugteil 3 befestigt werden, müssen lediglich die Schraubenöffnung 8 und das Schraubgewinde 9 in Überlappungspositionen gebracht und die Schraube 6 in die Einführhülse 11 eingeschoben werden. In der Einführhülse 11 wird die Schraube 6 automatisch durch die vorteilhafte Trichterführung der Führungszungen 15 derart ausgerichtet, dass sie durch die Schraubenöffnung 8 in das Schraubgewinde 9 eingeführt wird, ohne dass sie verkanten kann, wobei die Führungszungen 15 gegebenenfalls bereits ein Stück weit aufgespreizt werden. Beim Einschrauben in das Schraubgewinde 9 drängt der Schraubenkopf 7 außerdem die elastisch verformbaren Führungszungen 15 radial nach außen, sodass diese weiter aufgespreizt werden. Ein vollständiges Einschrauben der Schraube 6 wird somit durch die elastische Verformbarkeit der Führungszungen 15 gewährleistet, wobei diese die Schraube 6 ausrichten und führen, bis sie fest verschraubt ist. Die Einführhülse 11 stützt sich dabei mittels der Abstandshalter 14 an dem Sitzgestell 4, insbesondere axial sicher ab. Dadurch, dass die Führungszungen 15 gleichmäßig über den Umfang der Schraube 6 verteilt angeordnet sind, ist eine sichere und eindeutige Führung der Schraube 6 gewährleistet. Gemäß einem alternativen Ausführungsbeispiel, das in Figur 4 gezeigt ist, ist jedoch auch eine sichere Führung der Schraube 6 mit nur zwei Führungszungen 15 möglich. Figur 4 zeigt hierzu noch einmal den Ausschnitt der Vorrichtung 7, in einer Unteransicht, wobei im Unterschied zu dem vorhergehenden Ausführungsbeispiel die Einführhülse 11 nur zwei Führungszungen 15 aufweist, die einander diametral gegenüberliegend angeordnet sind. Die Führungszungen 15 weisen dabei an ihren freien Enden 16 eine gekrümmte Kontur auf, wodurch die Führungszungen 15 eine konkave Form an ihrem freien Ende 16 erhalten. Durch diese konkave Form wird die Schraube 6 zwischen den beiden Führungszungen 15 ebenfalls sicher geführt. Sind drei oder mehr als drei Führungszungen 15 vorgesehen, so kann auf eine konkave Ausbildung der freien Enden 16 verzichtet werden, da dann die Schraube 6 durch die eindeutige Lagerung bereits ausreichend geführt ist. Selbstverständlich ist es jedoch auch denkbar, die drei Führungszungen 15, wie sie beispielsweise in Figur 3 gezeigt sind, mit entsprechend gekrümmten Enden 16 zu versehen.

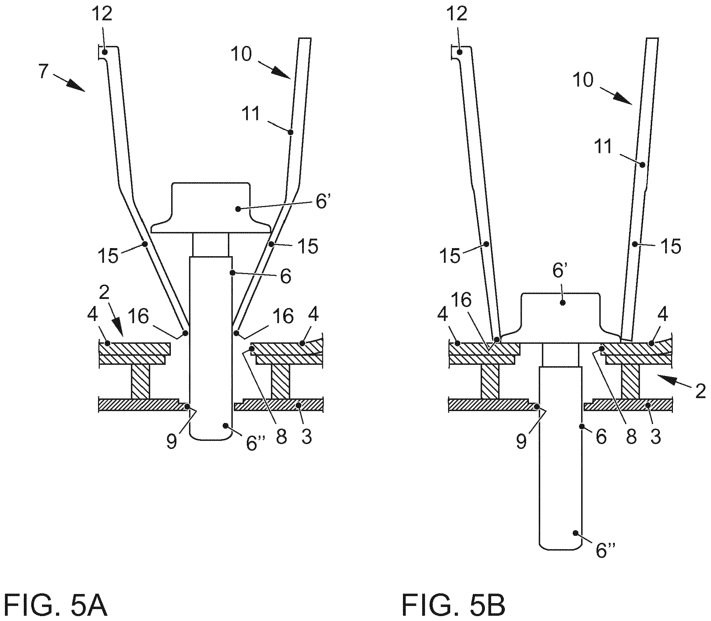

Figuren 5A und 5B zeigen die Vorrichtung 7 in unterschiedlichen Montagezuständen beziehungsweise Betriebszuständen. Dabei ist die Vorrichtung 7 jeweils in einer vereinfachten Längsschnittdarstellung gezeigt.

Figur 5A zeigt den Zustand, der auch in Figur 2 bereits gezeigt ist, in welchem die Schraube 6 in die Einführhülse 11 eingeschoben wurde, sodass sie mit ihrem Gewindeschaft 6" durch die Schraubenöffnung 8 in das Schraubgewinde 9 eingeführt ist. Die lichte Weite zwischen den Enden 16 der Führungszungen 15 entspricht dabei in etwa dem Durchmesser des Schraubenschafts 6", sodass die Schraube 6 einfach in die Schraubenöffnung 8 einführbar ist.

Wird die Schraube 6 nun weiter in die Gewindebohrung 9 eingeschraubt bis der Schraubenkopf 6' auf dem Sitzgestell 4 aufliegt, so beginnt der Schraubenkopf 6`, die Führungszungen 15 aufzuspreizen, wie in Figur 5B gezeigt. Dadurch lässt sich die Schraube 6 problemlos festziehen und wird zum Ende durch die Fürhungszungen 15 sicher geführt.

Die Führungszungen 15 weisen dabei dieselbe Länge wie die Abstandshalter 14 auf, wobei die lichte Weite zwischen den freien Enden der Abstandshalter 14 im Wesentlichen dem größten Durchmesser des Schraubenkopfs 6' entspricht. Dabei wird erreicht, dass die Führungszungen 15 maximal derart weit auseinandergespreizt werden, dass sie an dem größten Außendurchmesser des Schraubenkopfs 6` radial anliegen und nicht etwa im maximal angeschraubten Zustand der Schraube 6 zurückfedern und hinter dem Schraubenkopf 6' einrasten, wodurch die Schraube 6 außerdem formschlüssig gesichert wäre. Durch die beschriebene vorteilhafte Ausbildung wird erreicht, dass die Schraube 6 jederzeit einfach wieder durch Aufschrauben gelöst werden kann. Alternativ kann vorgesehen sein, dass die Führungszungen 15 etwas kürzer ausgebildet sind als die Abstandshalter 14, sodass die Führungszungen 15 im volleingeschraubten Zustand der Schraube 6 etwas zurückfedern und dadurch hinter dem Schraubenkopf 6' einrasten. Wird nun die Schraube 6 wieder gelöst, so wird ein Werkzeug in die Einführhülse 11 eingeführt, das die Führungszungen 15 wieder aufspreizt und dadurch die Verrastung der Schraube 6 durch die Führungszungen 15 löst.

Durch die vorteilhafte Vorrichtung 7, die natürlich auch an anderer Stelle, beispielsweise im Möbelbau, oder auch zur Befestigung von Kunststoffteilen aneinander, Verwendung finden kann, wird also erreicht, dass die Schraube 6 nicht verkantet und bei der Montage in einer aufrechten Position gehalten und der Schraubenöffnung 8 automatisch zugeführt wird. Es ist weiterhin denkbar, wie oben bereits erwähnt, die Vorrichtung 7 oder Einzelteile davon nicht aus Metall, sondern aus Kunststoff zu fertigen. Von einem Monteur kann die Schraube 6 insofern in den durch die Einführhülse 11 gebildeten Trichter eingeworfen und blind beziehungsweise automatisch verschraubt werden. Die elastisch verformbaren Führungszungen 15 sorgen außerdem dafür, dass das Werkzeug beim Schrauben der Schraube 6, sowohl beim Einschrauben als auch beim Ausschrauben, sicher geführt wird. Dadurch, dass die Führungszungen 15 elastisch verformbar sind, ist die Schraube 6 beziehungsweise der Schraubenkopf 6' stets für das Werkzeug frei zugänglich. Die Abstandshalter 14 gewährleisten eine sichere Führung von Schraube 6 und Werkzeug, insbesondere dann, wenn die Führungszungen 15 noch nicht aufgespreizt sind/wurden. Sie gewährleisten zudem eine Abstützung der Einführhülse 11 in vertikaler beziehungsweise axialer Richtung.

## Patentansprüche

1. Anordnung, mit einem ersten Teil, mit einem zweiten Teil, wobei das erste Teil zur Befestigung an dem ein Schraubgewinde (9) aufweisenden zweiten Teil wenigstens eine Schraubenöffnung (8) aufweist, mit einer durch die Schraubenöffnung (8) in das Schraubgewinde (9) eingeschraubten Schraube (6), und mit einer Vorrichtung (7) zum Befestigen des ersten Teils, an dem zweiten Teil, wobei die Vorrichtung (7) eine der Schraubenöffnung (8) zugeordnete Einführhilfe (10) mit wenigstens zwei Führungszungen (15) aufweist, die trichterförmig zu der Schraubenöffnung (8) aufeinander zu laufen und zumindest an ihren der Schraubenöffnung (8) zugewandten freien Enden (16) elastisch aufspreizbar sind, **dadurch gekennzeichnet, dass** die Einführhilfe (10) derart ausgebildet oder angeordnet ist, dass die freien Enden (16) der Führungszungen (15) seitlich an dem größten Durchmesser des Schraubenkopfs (6") anliegen, wenn die Schraube (6) maximal in das Schraubgewinde (9) eingeschraubt ist.

2. Anordnung nach Anspruch 1, **dadurch gekennzeichnet, dass** die Führungszungen (15) elastisch verformbar ausgebildet sind.

3. Anordnung nach einem der vorhergehenden Ansprüche, **dadurch gekennzeichnet, dass** die Einführhilfe (10) eine Einführhülse (11) aufweist, die zumindest abschnittsweise als axial geschlitzte Einführhülse (11) zum Formen der Führungszungen (15) ausgebildet ist.

4. Anordnung nach einem der vorhergehenden Ansprüche, **dadurch gekennzeichnet, dass** die freien Enden (16) der Führungszungen (15) im entspannten Zustand der Führungszungen (15) auf einem gedachten Kreis liegen, dessen Durchmesser kleiner oder gleich dem Innendurchmesser der Schraubenöffnung (8) und/oder des Schraubgewindes (9) ist.

5. Anordnung nach einem der vorhergehenden Ansprüche, **dadurch gekennzeichnet, dass** die Einführhülse (11) abschnittsweise zylinderförmig ausgebildet ist, wobei ein Durchmesser oder eine Breite der lichten Weite der Einführhülse (11) größer oder gleich einem Durchmesser oder einer Breite eines Schraubenkopfs (6") der Schraube (6) ist.

6. Anordnung nach einem der vorhergehenden Ansprüche, **dadurch gekennzeichnet, dass** die Einführhilfe (10) formschlüssig an dem ersten Teil ausgerichtet ist.

7. Anordnung nach einem der vorhergehenden Ansprüche, **dadurch gekennzeichnet, dass** die Einführhülse (11) wenigstens einen Abstandshalter (14) zum Ausrichten der Einführhülse (11) an dem ersten Teil aufweist.

8. Anordnung nach einem der vorhergehenden Ansprüche, **dadurch gekennzeichnet, dass** die Einführhülse (11) über ihren Umfang verteilt abwechselnd angeordnet drei Abstandshalter und drei Führungszungen (15) aufweist, die die gleiche Länge aufweisen.

9. Anordnung nach einem der vorhergehenden Ansprüche, **gekennzeichnet durch** die Ausbildung als Fahrzeugsitzanordnung (1), mit einem Sitz (2) als erstes Teil und mit einem Fahrzeugteil (3) als zweites Teil.

## Claims

1. Arrangement, comprising a first part, comprising a second part, the first part having at least one screw opening (8) for attachment to the second part having a screw thread (9), comprising a screw (6) which is screwed into the screw thread (9) through the screw opening (8), and comprising a device (7) for attaching the first part to the second part, the device (7) having an insertion aid (10) which is associated with the screw opening (8) and comprises at least two guide tongues (15) which extend toward one another in a funnel shape to the screw opening (8) and can be elastically spread apart at least at their free ends (16) facing the screw opening (8), **characterized in that** the insertion aid (10) is designed or arranged such that the free ends (16) of the guide tongues (15) laterally abut the largest diameter of the screw head (6") when the screw (6) is fully screwed into the screw thread (9) .

2. Arrangement according to claim 1, **characterized in that** the guide tongues (15) are designed to be elastically deformable.

3. Arrangement according to any of the preceding claims,
**characterized in that** the insertion aid (10) has an insertion sleeve (11) which is formed at least in portions as an axially slotted insertion sleeve (11) for forming the guide tongues (15).

4. Arrangement according to any of the preceding claims,
**characterized in that,** in the relaxed state of the guide tongues (15), the free ends (16) of the guide tongues (15) lie on an imaginary circle, the diameter of which is smaller than or equal to the inner diameter of the screw opening (8) and/or the screw thread (9).

5. Arrangement according to any of the preceding claims,
**characterized in that** the insertion sleeve (11) is designed to be cylindrical in portions, a diameter or a width of the clear width of the insertion sleeve (11) being greater than or equal to a diameter or a width of a screw head (6") of the screw (6).

6. Arrangement according to any of the preceding claims,
**characterized in that** the insertion aid (10) is form-fittingly aligned with the first part.

7. Arrangement according to any of the preceding claims,
**characterized in that** the insertion sleeve (11) has at least one spacer (14) for aligning the insertion sleeve (11) with the first part.

8. Arrangement according to any of the preceding claims,
**characterized in that** the insertion sleeve (11) has three spacers and three guide tongues (15) which are arranged in an alternating manner over the circumference of said sleeve and have the same length.

9. Arrangement according to any of the preceding claims,
**characterized by** the design as a vehicle seat arrangement (1), comprising a seat (2) as the first part and comprising a vehicle part (3) as the second part.

## Revendications

1. Agencement comportant une première partie et comportant une seconde partie, la première partie présentant au moins une ouverture de vis (8) pour la fixation à la seconde partie présentant un filetage de vis (9), comportant une vis (6) vissée dans le filetage de vis (9) à travers l'ouverture de vis (8), et comportant un dispositif (7) pour la fixation de la première partie à la seconde partie, le dispositif (7) présentant une aide à l'insertion (10) associée à l'ouverture de vis (8) et comportant au moins deux languettes de guidage (15) qui s'étendent l'une vers l'autre en forme d'entonnoir vers l'ouverture de vis (8) et peuvent être écartées de manière élastique au moins au niveau de leurs extrémités libres (16) orientées vers l'ouverture de vis (8), **caractérisé en ce que** l'aide à l'insertion (10) est conçue ou disposée de telle sorte que les extrémités libres (16) des languettes de guidage (15) reposent latéralement sur le plus grand diamètre de la tête de vis (6") lorsque la vis (6) est vissée au maximum dans le filetage de vis (9).

2. Agencement selon la revendication 1, **caractérisé en ce que** les languettes de guidage (15) sont conçues de manière à pouvoir être déformées de manière élastique.

3. Agencement selon l'une des revendications précédentes,
**caractérisé en ce que** l'aide à l'insertion (10) présente une douille d'insertion (11) conçue, au moins dans certaines régions, sous la forme d'une douille d'insertion (11) à fente axiale pour former les languettes de guidage (15).

4. Agencement selon l'une des revendications précédentes,
**caractérisé en ce que** les extrémités libres (16) des languettes de guidage (15) sont situées sur un cercle imaginaire lorsque les languettes de guidage (15) se trouvent à l'état détendu, le diamètre dudit cercle est inférieur ou égal au diamètre intérieur de l'ouverture de vis (8) et/ou du filetage de vis (9).

5. Agencement selon l'une des revendications précédentes,
**caractérisé en ce que** la douille d'insertion (11) est conçue sous forme cylindrique dans certaines régions, un diamètre ou une largeur de la largeur intérieure de la douille d'insertion (11) étant supérieur ou égal à un diamètre ou à une largeur d'une tête de vis (6") de la vis (6).

6. Agencement selon l'une des revendications précédentes,
**caractérisé en ce que** l'aide à l'insertion (10) est alignée par complémentarité de forme sur la première partie.

7. Agencement selon l'une des revendications précédentes,
**caractérisé en ce que** la douille d'insertion (11) présente au moins un espaceur (14) destiné à aligner la douille d'insertion (11) sur la première partie.

8. Agencement selon l'une des revendications précédentes,
**caractérisé en ce que** la douille d'insertion (11) présente, répartis en alternance sur sa circonférence, trois espaceurs et trois languettes de guidage (15) présentant la même longueur.

9. Agencement selon l'une des revendications précédentes,
**caractérisé par** la configuration sous forme d'agencement formant siège de véhicule (1), comportant un siège (2) comme première partie et comportant une partie de véhicule (3) comme seconde partie.
